# EUROPÄISCHE PATENTANMELDUNG

(11) **EP 1 623 678 A2**
(43) Veröffentlichungstag der Anmeldung: **08.02.2006**
(21) Anmeldenummer: 05405465.5
(22) Anmeldetag: 03.08.2005
(51) Int. Cl.: A61C 3/02

(54) **Verfahren zur Anpassungs-Bearbeitung an einer orthodontischen Apparatur mit einem Fräser, Verfahren zu dessen Herstellung und Fräser**

(30) Priorität: 05.08.2004 EP 04405498
(71) Anmelder: Moecke, Jens, 1713 St. Antoni (CH); Spicher, Xaver, 1713 St. Antoni (CH)
(72) Erfinder: Spicher, Hugo, 3186 Düdingen (CH)

(57) **Zusammenfassung**

Beim Verfahren zur Anpassungs-Bearbeitung an einer orthodontischen Apparatur **(13)** mit einem Fräser **(1),** wobei die Apparatur **(13)** einen Kunststoff-Grundkörper **(15)** mit aus diesem hervorstehenden stählernen Elementen **(9** bis **11),** insbesondere Halteelementen für eine Fixierung und/oder Halterung am Unter- oder Oberkiefer hat, wird zur Bearbeitung ein Fräserschneiden **(5a, 5b)** aufweisender Fräser **(1)** verwendet. Die Härte des Fräsers und seiner Schneiden ist lediglich um eine Sicherheitstoleranz kleiner als die Härte der stählernen Elemente **(9** bis **11)**. Die Härte ist somit weitaus grösser als diejenige des Kunststoff-Grundkörpers **(15).**

Durch die erfindungsgemässen Fräser wird damit eine langen Standzeit bei einer hohen Materialabtragungsrate unter einer zu vernachlässigenden Wärmebeanspruchung des Grundkörpers **(15)** am Bearbeitungsort sowie keine (merkliche) Abrasion an den Halteelementen **(9 bis11)** bei einer unvorhergesehenen Touchierung erreicht.

## Beschreibung

### Technisches Gebiet

Die Erfindung betrifft ein Verfahren zu einer Anpassungs-Bearbeitung an einer orthodontischen Apparatur mit einem Fräser gemäss dem Oberbegriff des Patentanspruchs 1, ein Verfahren zur Herstellung von Fräsern gemäss dem Oberbegriff des Patentanspruchs 7 sowie Fräser gemäss dem Oberbegriff des Patentanspruchs 10.

### Stand der Technik

Orthodontische Apparaturen, wie beispielsweise Aufbisse, haben einen Grundkörper aus Kunststoff (z.B einem Autopolymerisat). Eingelegt, d.h. einpolymerisiert, sind in den Grundkörper Bogendrähte und auch Stangendrähte. Bogendrähte und auch Stangendrähte bestehen aus Stahl mit einer Festigkeit von 1400 N/mm² bis 2000 N/mm². Die Drähte dienen dazu, den Apparat am Ober- bzw. Unterkiefer zu halten, eine Zahnstellungskorrektur vorzunehmen oder sonstige Einheiten zu halten.

Die Apparaturen werden nach einem im Mund des Patienten angefertigten sogenannten Abdruck hergestellt. Im Herstellungsverfahren, insbesondere im zahntechnischen Labor, muss der Grundkörper nach einer Polymerisation ausgehend vom Abdruck, bei dem die stählernen Drähte einpolymerisiert werden, überarbeitet werden, um einen genauen Sitz im Patientenmund zu erreichen. Unter Umständen muss auch beim Zahnarzt noch eine Feinanpassung vorgenommen werden. Die fertige orthodontische Apparatur hat eine durch Fräsen mit einem anschliessenden Polieren angepasste Kunststoffplatte, aus der einpolymerisierte, stählerne Elemente hervorstehen.

Diese Anpassungsarbeiten werden u.a. durch Abfräsen von Kunststoffmaterial am Grundkörper vorgenommen. Bei diesen Anpassungen im Labor oder bei der Bearbeitung durch den Zahnarzt, der die orthodontische Apparatur lediglich in der Hand und nicht in einer festen Einspannung hält, kann es geschehen, dass der Zahnarzt oder der Laborangestellte vom Grundkörper abrutscht und hierbei einen der einpolymerisierten Drähte verletzt, wodurch dessen Stabilität beeinträchtigt werden kann. Oftmals muss dann das beschädigte, stählerne Elemente ausgewechselt werden, was aufwändig ist und oftmals nur durch eine erneute Herstellung der gesamten Apparatur möglich ist.

Aus der deutschen Patentanmeldung DE 31 03 349 ist ein Werkzeugsatz mit drei Stiftwerkzeugen für die Bearbeitung kieferorthopädischer Regulierungsspangen bekannt. Der Werkzeugsatz hatte einen dreikantigen Schrubber, eine mit vier Schneidezähnen versehene Gipsfräse und einen mit einem Loch in Achsrichtung versehenen Drahtendschleifstein. Es wurde vorgeschlagen, den Schrubber aus Bronze, die Fräse aus Werkzeugstahl und den Stein aus Siliciumcarbid oder Aluminiumoxid herzustellen.

Die Gipsfräse diente zur Bearbeitung der Gipsmodelle. Der Drahtendschleifstein wurde, wie schon sein Name sagt, zum Glatt-Schleifen von Drahtenden, welche im Mund des Patienten frei am Zahn anliegen, verwendet.

Der Bronzeschrubber diente zur Bearbeitung des aus Kunststoff hergestellten Grundkörpers von Aufbissen. Der Bronzeschrubber wurde mit einer derart hohen Tourenzahl betrieben, dass der Kunststoff an den Bearbeitungsstellen aufgrund der hierbei erzeugten Reibungswärme erweichte und dadurch auch in unmittelbarer Nähe der aus dem Kunststoff herausragenden Edelstahldrähte eine Grundkörper-Formgebung möglich war. Da die Erwärmung durch Reibung das Hauptbearbeitungsmittel war, war ein Verschleiss der Kanten des Schrubbers nicht von grosser Bedeutung; der Schrubber tat auch noch seinen Dienst, wenn er schon recht stumpf war. Es wurde vorgeschlagen, die Kanten mit einer Feile wieder in Form zu bringen.

Gemäss Römpp Chemie Lexikon A-Cl (1993) wird unter Bronze nach DIN 1718 eine "Legierung aus mindestens 60% Cu und einem oder mehreren Hauptlegierungszusätzen, von denen Zink nicht überwiegen darf' verstanden.

Kunststoffe, wie z.B. Polystyrol, Luran usw. haben eine Kugeldruckhärte HC60 im Bereich von etwa 100 bis 160. Eine Kugeldruckhärte (Brinellhärte) von 100 bis 150 entspricht etwa einer Vickershärte von 105 bis 168. Eine Bronze-Gusslegierung z.B. CuSn5Zn5Pb5-C hat gemäss Deutschem Kupferinstitut eine Brinellhärte von etwa 65. Eine beispielsweise Bronze-Knetlegierung CuSn4 hat eine Vickershärte gemäss Deutschem Kupfer-Institut zwischen 75 und 225. Vereinfacht ausgedrückt, entsprechen Härtewerte von Vickers und Brinell etwa einander. Eine Vickershärte von 200 entspricht einer Rockwellhärte unter 20.

Die verwendeten Drähte hingegen haben typischer Weise eine Rockwellhärte im Bereich von 44 bis 55, d.h. eine Vickershärte von etwa 434 bis 602.

In der DE 31 03 349 wird somit ein Bronzeschrubber verwendet, dessen Härte bedeutend tiefer als die Härte der Drähte ist, aber nur geringfügig höher als diejenige des zu bearbeitenden Kunststoffes. Der Bronzeschrubber muss deshalb des Öfteren mit einer Feile nachgeschliffen werden.

### Darstellung der Erfindung

### Aufgabe

Aufgabe der Erfindung ist es, ein Verfahren zur Anpassungs-Bearbeitung an einer orthodontischen Apparatur mit einem Fräser, ein Herstellungsverfahren eines hierbei zu verwendenden Fräsers sowie einen Fräser vorzuschlagen, bei denen eine einwandfreie Bearbeitung einer orthodontischen Apparatur unter einem Ausschluss einer Verletzung der aus deren Grundkörper hervorstehenden, stählernen Elemente gegeben ist. Die Fräser sollen zudem eine lange Standzeit aufweisen.

### Lösung

Zur Lösung dieser Aufgabe beschreitet die Erfindung einen gänzlich anderen Weg als die Lehre der DE 31 03 349 aufzeigt. Es wird nämlich nicht ein Werkzeug geschaffen, welches gerade noch den zu bearbeitenden Kunststoff unter Ausnützen von Reibungswärme bearbeitet, indem es eine um eine Bearbeitungstoleranz höhere Härte hat. Die Erfindung verwendet ein Werkzeug zur Kunststoffbearbeitung, welches eine möglichst hohe Härte aufweist, um eine möglichst grosse Standzeit und eine hohe Materialabtragungsrate zu erhalten. Die Härte des Material abtragenden Werkzeugs wird nun gerade derart gewählt, dass dessen Härte um eine Sicherheitstoleranz unter derjenigen der nicht zu beschädigenden Drähte liegt. Diese mit Blick auf die DE 31 03 349 nur geringe Härtedifferenz kann nämlich gewählt werden, da ein Berühren der unverletzt zu bleibenden Drähte wenn überhaupt, dann nur kurzzeitig erfolgt.

Im Gegensatz zur Lehre der DE 31 03 349 wird bei der Erfindung der Kunststoff nicht durch Reibungswärme erweicht; es wird mit dem Fäser ohne nennenswerte Erwärmung abgefräst. Eine Eigenschaftsveränderung des Kunststoffes durch eine Erwärmung, wie bei der DE 31 03 349 zu befürchten ist, kann somit in eindeutiger Weise ausgeschlossen werden.

Die Lösung der Aufgabe betreffend des Bearbeitungsverfahrens zur Anpassungs-Bearbeitung an einer orthodontischen Apparatur erfolgt durch die Merkmale des Patentanspruchs 1, betreffend einem Herstellungsverfahren eines hierbei zu verwendenden Fräsers erfolgt die Lösung durch die Merkmale des Patentanspruchs 7 sowie eines Fräsers durch die Merkmale des Patentanspruchs 10. Bevorzugte Aufgaben und Ausführungen werden durch die abhängigen Patentansprüche gelöst.

Erfindungsgemäss wird nun ein Fräserschneiden aufweisender Fräser verwendet, dessen Härte vorgegeben ist. Die Härte ist um eine Sicherheitstoleranz kleiner als diejenige der aus einem Grundkörper einer orthodontischen Apparatur hervorstehenden, einpolymerisierten, stählernen Elemente. Die Härte ist zudem bedeutend grösser gewählt als diejenige des Grundkörpers. Die Härte liegt somit zwischen der Härte des Grundkörpers und derjenigen der stählernen Elemente. Durch diese Auswahl wird
◆ eine lange Standzeit des Fräsers erhalten,
◆ eine hohe Materialabtragungsrate erreicht,
◆ lediglich eine zu vernachlässigende Wärmebeanspruchung des Grundkörpers am Bearbeitungsort erhalten,
◆ keine erkennbare Abrasion an den Halteelementen **(9-11)** bei einer unvorhergesehenen Touchierung erhalten.

Die stählernen Elemente sind beispielsweise Bogendrähte:
➢ sogenannte harte bzw. federharte Laborrollen mit 1400 bis 1600 N/mm² (44 - 49 Rockwellhärtegrade) bzw. 1800 N/mm² bis 2000 N/mm² (42 - 55 Rockwellhärtegrade),
➢ runde Klinikrollen mit derselben Festigkeit,
➢ halbrunde Rollendrähte mit 1400 bis 1600N/mm²,
➢ runde Stangendrähte mit 1800 bis 2000 N/mm².

Unter den Begriff stählerne Elemente fallen auch Corzat-Drähte, Ligaturdrähte, geflochtene Dentaflex-Drähte, Dreiecksklammern, lingual Retainer, Palatinalbügel, Lingualbügel, Lingual-Doppelhäkchen usw.. In der Regel sind die oben angeführten Elemente aus Stahl, da dieser eine ausgezeichnete Formstabilität vereint mit einer Federwirkung aufweist. Es könnten selbstverständlich auch nicht-stählerne Elemente verwendet werden, was im Augenblick allerdings nicht üblich ist. Der Ausdruck stählerne Elemente ist somit nicht unbedingt auf das Material Stahl zu beziehen.

Der Grundkörper der Apparatur besteht aus einem Kunststoff, z.B. einem Autopolymerisat, welcher Zusätze enthalten kann.

Bei einem ungewollten Abrutschen und Berühren der stählernen Elemente wird erfindungsgemäss kein Material von diesen abgetragen; wenn ein Materialabtrag überhaupt erfolgt, dann nur beim Fräser. Da ein Drahtkontakt die Ausnahme darstellt, reduziert sich hierdurch die Standzeit des Fräsers lediglich um einige wenige Prozent (auf jeden Fall unter etwa 10 %). D. h. die Fräser müssen kaum öfter ausgewechselt werden, was jedoch immer noch bedeutend billiger ist, als eine aufwändige Reparatur bzw. Neuanfertigung vorzunehmen. Nicht nur die geringeren Kosten insgesamt sind ein Vorteil, sondern auch die bessere Qualität der hergestellten orthodontischen Apparatur: Denn oftmals wurde ein angefräster Draht belassen, in der Hoffnung, man merke es nicht und er würde wohl doch noch halten. Angefräste Drähte gibt es nun nicht mehr.

Um sicher zu gehen, wird eine Herstellungstoleranz der vorgegebenen Härte gewählt. Die vorgegebene Härte der Fräser soll um fünf Rockwellhärtegrade kleiner sein als die Härte der stählernen Elemente. Da die stählernen Elemente in der Regel immer mit geringen Abweichungen in ein und demselben Härteintervall liegen, kann die Härte der Fräser kleiner einer Rockwellhärte von 44 gewählt werden.

Der Basiskörper (Fräserkopf) mit seinen Fräserschneiden kann nun durch eine Warmverformung durch Fräsen und Schleifen zur Schneidenherstellung und einer anschliessenden Wärmebehandlung zur Härtung erfolgen. Es kann aber auch von einem Material ausgegangen werden, welches durch eine Kaltverformung den gewünschten Härtegrad erhalten hat.

Vorzugsweise wird man im Bereich der Schneiden eine sogenannte Hartschicht mit vorgegebener Härte durch die nachfolgenden Härte- bzw. Wärmeverfahren erzeugen. Wie oben ausgeführt, ist die Härte derart gewählt, dass der die stählernen Elemente tragende Grundkörper bearbeitet, die stählernen Elemente jedoch nicht bearbeitet werden. Bei einer ungewollten Berührung der stählernen Elemente wird nur Material von den Fräserschneiden abgetragen.Die Hartschicht im Bereich der Schneiden mit der vorgegebenen Härte muss eine der Schneidenkonfiguration entsprechende minimale Dicke aufweisen. In der Regel wird eine Dicke von maximal 0,5 mm ausreichend sein. Da jedoch orthodontische Apparaturen filigrane Objekte darstellen, sind auch die Fräserschneiden klein; in diesem Fall kann somit eine Hartschicht mit einer Dicke von unter 30 µm ausreichend sein.

Ein Fräser, der sich für filigrane Bearbeitungen gut eignet, ist stiftartig (sogenannter Nagelfräser) ausgebildet. Dieser Fräser hat einen im Querschnitt vorzugsweise kreiszylindrischen Schaft am einen Stiftende und am anderen Stiftende konisch zusammenlaufende, Schneidkanten bildende Flächen. Die konisch zusammenlaufenden Flächen bildet man vorzugsweise derart aus, dass sich ein gerader Kegel- bzw. Pyramidenstumpf ergibt. Der Querschnitt des Stumpfes kann nun drei-, vier-, oder mehreckig sein. Die Ecken sind dann die Fräserschneiden. Dieser Fräser ist für einen Eingriff in schmale Zwischenräume geeignet.

Diese Fräser stellt man vorzugsweise mit einer Härte des gesamten Fräsermaterials her, die um eine Sicherheitstoleranz kleiner ist als die stählernen Elemente aber bedeutend grösser als die Härte des Kunststoffmaterials des Grundkörpers.

Als Fräsermaterial wird ein Stabmaterial insbesondere ein Stahl mit der Werkstoffkennzeichnung 1.4301; 1.4305; 1.4404 + S+Cu oder 1.4435 oder ein artverwandtes Material verwendet. Das Ausgangsmaterial hat eine Zugfestigkeit (Rm) zwischen 750 N/mm² und 1000 N/mm² (etwa 21 bis 31 Rockwellhärtegrade). Anstelle von Stahl können selbstverständlich auch andere Materialien wie Hartaluminium verwendet werden. Wichtig ist nur, dass die hier angegebenen Härtewerte eingehalten werden.

Der zylinderförmige Stahlstab wird zur Härtung unter einer Durchmesserreduzierung kaltgezogen, wobei das Stabmaterial derart kaltgezogen wird bis sein Durchmesser sich auf etwa 85% verringert hat. Durch das Kaltziehen wird eine Zugfestigkeit von etwa 1100 N/mm², was einer Brinellhärte von etwa HB 350 (35 Rockwellhärtegrade) entspricht, erreicht. Die hierbei erreichte Zugfestigkeit von 1100 N/mm² liegt somit eindeutig unter der eingangs erwähnten Festigkeit von 1400 N/mm² bis 2000N/mm² (44 bis 55 Rockwellhärtegrade) der Bogen- und Stangendrähte der orthodontischen Apparatur. Der kaltgezogene Stahlstab wird auf vorgegebene Fräserlängen abgelenkt und jeweils ein abgelenktes Stabende als gerade Pyramide geformt. Es können nun Pyramiden mit einer dreieckigen, quadratischen, fünfeckigen, usw. Grundfläche ausgebildet werden. Die Pyramidenflächen wird man in der Regel anschleifen. Die Pyramidenkanten sind dann die Schneiden des Fräsers.

Die zum Härten durch einen kalten Ziehvorgang verwendeten Stähle sollten einen möglichst geringen Kohlenstoffgehalt aufweisen. Ist der Kohlenstoffgehalt zu hoch, ist es schwer beim Ziehvorgang eine Härte einzustellen, welche unter der Härte der stählernen Elemente der Apparatur liegt. Als Richtwert kann gesagt werden, dass der Kohlenstoffgehalt im Bereich von geringfügig unter 0,03% bei 1.4435 und 1.4404 liegen sollte.

Es muss nun nicht das gesamte Material des Fräsers auf die vorgegebene Härte gebracht, sondern nur Bereiche an der Oberseite des Fräser, insbesondere im Bereich der Fräserschneiden. Eine derartige Härtung wird man vorzugsweise bei sogenannten Formfräsern anwenden. Um diesen Bereichen die vorgegebene Härte zu geben, wird ein Wärmeverfahren angewandt. Hierbei wird in einem ersten Schritt unter Schutzgas auf über 1000°C, vorzugsweise auf 1030°C ± 10°C erwärmt und dann in Wasser abgeschreckt. Anschliessend wird auf eine Temperatur von 700°C mit einer vorgeschlagenen Genauigkeit von ± 10°C angelassen. Die Anlasstemperatur und die Anlasszeit sind vorzugsweise derart gewählt, dass sich eine Hartschicht wenigstens bei den Fräserschneiden und deren benachbarten Bereichen mit der geforderten Härte, vorzugsweise eine Härte kleiner als eine Rockwellhärte von 43,5, bildet und die Hartschicht eine Tiefe bis bevorzugt 0,5 mm, insbesondere kleiner 30 µm hat.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen
- Figur 1: eine Seitenansicht einer bevorzugten Ausführungsform eines "Nagel-Fräsers",
- Figuren 2a bis 2e: eine Seitenansicht einer bevorzugten Ausführungsform von "Formfräsern" und
- Figur 3: eine typische orthodontische Apparatur.

Grundsätzlich sind in den Figuren gleiche Teile und Elemente mit gleichen Bezugszeichen versehen.

### Wege zur Ausführung der Erfindung

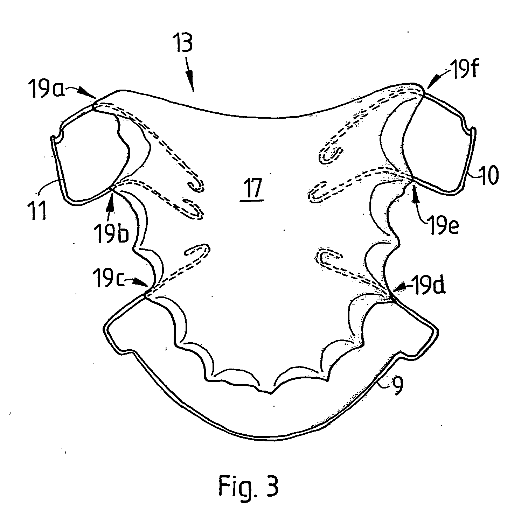

Für eine genaue Anpassung des beispielsweise in **Figur 3** gezeigten Grundkörpers **15** einer orthodontischen Apparatur **13** an den Patientenmundraum muss nämlich eine Nachbearbeitung des Kunststoff-Grundkörpers **15** der Apparatur **13** erfolgen. Bei der Anpassung der Gaumenpartie **17** des Grundkörpers **15** könnte mit beliebigen Fräsern gearbeitet werden. Muss jedoch Material im Bereich **19a** bis **19f** des Eintritts der stählernen Elemente **9** bis **11** in den Grundkörper entfernt werden, kann es geschehen, dass mal eines der Elemente **9** bis **11** touchiert wird, was einen Materialabtrag von einem der Elemente **9, 10** oder **11** zur Folge haben kann. Dieser Materialabtrag zieht eine Schwächung des betreffenden Elements nach sich.

Eine Apparatur mit einem geschwächten Element sollte nicht beim Patienten eingesetzt werden, da ein Bruch des betreffenden Elements zu einem späteren Zeitpunkt erfolgen könnte.

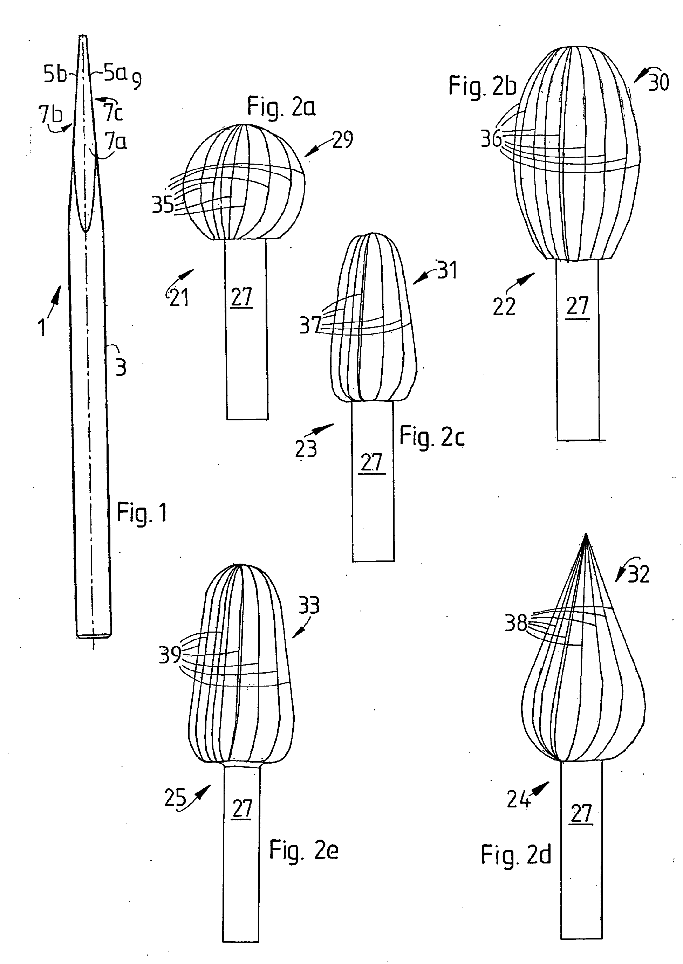

Eine Verletzung der stählernen Elemente **9** bis **11** kann durch den in **Figur 1** gezeigten, gemäss der Erfindung ausgebildeten Fräser **1** verhindert werden. Der Fräser **1** stellt eine spezielle Ausführungsart der Erfindung dar. Ein derartiger Fräser 1 ist für einen Eingriff in schmalen Zwischenräumen geeignet. Andere Fräsertypen und deren Herstellung sind unten beschrieben.

Der Fräser **1** hat hier beispielsweise eine Länge von 40 mm. Der Fräser **1** ist stiftartig mit einem Einspannschaft **3** an einem Stiftende ausgebildet. Einen derartigen Fräser **1** nennt man "Nagelfräser". Am anderen Stiftende hat der Fräser **1** vier konisch zusammenlaufende, vier Schneidkanten bildende Flächen **7a** bis **7c.** Von den vier Flächen sind in **Figur 1** nur die Flächen **7a** bis **7c** sichtbar und von den vier Schneidkanten die Schneidkanten **5a** und **5b.** Ein Querschnitt durch den Fräserkopf **9** ergibt ein quadratisches Schnittbild.

Als Fräsermaterial wird vorzugsweise ein Stahl mit der Werkstoffkennzeichnung 1.4301; 1.4305; 1.4404 + S + Cu oder 1.4435 verwendet.

Unter der Werkstoffbezeichnung 1.4435 wird ein rostbeständiger austenitischer Chrom-Nickel-Molybdänstahl gemäss DIN X2CrNiMo18-14-3 verstanden, wobei gemäss einer Richtanalyse maximal 0,03% C; maximal 1,00% Si, maximal 2,00% Mn; maximal 0,045 P; maximal 0,03" S, 17,00% bis 19,00% Cr; 12,50% bis 15,00% Ni und 2,50 bis 3,00% Mo enthalten sind. Die Prozentangaben sind Gewichtsprozente.

Unter der Werkstoffbezeichnung 1.4404 + S + Cu wird ein rostbeständiger, austenitischer Chrom-Nickel-Molybdänautomatenstahl verstanden, wobei gemäss einer Richtanalyse maximal 0,03% C; weniger als 1,00% Si; weniger als 2,00% Mn; 16,50% bis 18,50% Cr; 10,00% bis 13,00% Ni; 2,00% bis 2,50% Mo; weniger als 0,045% P; weniger als 0,15% S 1,00% bis 1,50% Cu und weniger als 0,11 % N enthalten sind. Die Prozentangaben sind Gewichtsprozente.

Unter der Werkstoffbezeichnung 1.4305 wird ein nichtrostender Décolletagestahl gemäss DIN X 8CrNiS 18 9 verstanden, wobei gemäss Richtanalyse maximal 0.10% C; maximal 0,10% Si; maximal 0,20% Mn; 17,00 bis 19,00% Cr, 8.00% bis 10,00% Ni; 0,15% bis 0,35% S und maximal 1,50% Cu enthalten sind. Die Prozentangaben sind Volumenprozente.

Unter der Werkstoffbezeichnung 1.4301 wird ein rostbeständiger Chromnickelstahl gemäss DIN X 5 CrNi 1810 verstanden, wobei gemäss Richtanalyse maximal 0,07% C; maximal 2,00% Mn; maximal 0,03% S; 17,00% bis 19,50% Cr und 8,00% bis 10,50% Ni enthalten sind. Die Prozentangaben sind Volumenprozente.

Das Ausgangsmaterial hat in dem hier angeführten Beispiel einen Durchmesser von 2,70 mm oder 2,80 mm und muss eine Zugfestigkeit von etwa 900 N/mm² im "Rohzustand" aufweisen. Das Ausgangsmaterial ist zylinderförmig. Es wird auf ein Durchmesserendmass von 2,35 mm kalt in mehreren Ziehvorgängen heruntergezogen. Durch diese kalten Ziehvorgänge verhärtet sich das Material auf die gewünschte Zugfestigkeit von ca. 1100 N/mm², was eine Brinellhärte HB von etwa 350 ergibt. Die hier angegebenen Werte sind experimentelle Werte und sollten bei jeder neuen Stahllieferung experimentell verifiziert werden.

Das Härten durch einen kalten Ziehvorgang hat sich bei der Herstellung der Nagelfräser **1** bewährt. Weichglühen bei über 1050°C, Härten durch Abschrecken in Wasser mit einer anschliessenden Wärmebehandlung zum Anlassen hat keine zufriedenstellende Ergebnisse erbracht.

Die Härte der Fräser **1** ist um eine Sicherheitstoleranz kleiner als diejenige der stählernen Elemente. Vorzugsweise reicht es, wenn die Härte der Fräser **1** um fünf Rockwellhärtegrade kleiner als die Härte der stählernen Elemente gewählt wird, damit bei einer ungewollten Berührung der Fräserschneiden mit einem der in **Figur 3** gezeigten stählernen Elemente **9** bis **11,** welche in einer orthodontischen Apparatur **13** teilweise eingebettet sind, kein Material von den Elementen **9** bis **11,** sondern wenn schon, nur Material an den Fräserschneiden abgetragen wird und das bzw. die stählernen Elemente unverletzt verbleiben. In dem hier gezeigten Beispiel ist anstelle einer Sicherheitstoleranz von nur fünf Rockwellhärtegraden eine Sicherheitstoleranz von neun bis zwanzig Rockwellgraden gewählt worden. Eine Zugfestigkeit von 1100 N/mm² des gehärteten Nagelfräsers entspricht 35 Rockwellhärtegraden. Die eingangs angegebene Zugfestigkeit der Bogen- und Stangendrähte von 1400 N/mm² bis 2000 N/mm² entspricht 44 bis 55 Rockwellhärtegraden.

In den **Figuren 2a - 2e** sind weitere Fräser **21** bis **25** dargestellt. Andere Fräserkonturen sind selbstverständlich möglich. Die hier dargestellten Fräser werden zum Fräsen vorgegebener Oberflächenprofile verwendet. Alle Fräser **21** bis **25** haben einen gleich ausgebildeten Einspannschaft **27,** mit dem sie auswechselbar in ein (nicht dargestelltes) Einspannfutter eines elektrischen Antriebes einspannbar sind. Anstelle eines elektrischen Antriebes kann selbstverständlich auch eine Luftturbine oder ein anderer Antrieb verwendet werden. Die Fräser **21** bis **25** haben in ihrer Kontur unterschiedlich ausgebildete Fräserköpfe **29** bis **33.** Die an den Köpfen **29** bis **33** angeordneten Schneiden **35** bis **39** sind der Kopfkontur angepasst ausgebildet.

Die Fräser **21** bis **25** können nun als Ganzes (Fräserkopf **29** bis **33** + Einspannschaft **27)** oder nur die Fräserköpfe **29** bis **33** alleine derart ausgebildet sein, dass analog zu den oben angeführten Nagelfräsern **1** deren Härte lediglich um eine Sicherheitstoleranz kleiner ist als die Härte der stählernen Elemente **(9-11),** und somit weitaus grösser ist als diejenige des Grundkörpers **15.**

Um dies zu erreichen, geht man beispielsweise von einem Stahl mit der Werkstoffnummer 1.4197 (X20CrNiMoS13-1 "Chronifer Labor M-Plus") aus. Die Fräser werden aus diesem Stahl in den geforderten Konturen hergestellt. Anschliessend erfolgt ein Härtevorgang. Beim Härten werden die Fräser **29** bis **33** unter Schutzgas auf 1030°C mit einer Temperaturgenauigkeit von ± 10°V erwärmt und dann abgeschreckt. Anschliessend wird bei einer Temperatur von 700°C mit einer Temperaturgenauigkeit von ± 10°V angelassen. Nach der Wärmebehandlung sollte das Material der Fräser eine Zugfestigkeit von 1080 ± 150 N/mm² (Rockwellhärte 34 ± 5 Rockwellhärtegrade) aufweisen. Die Härte liegt bei 340 HV (Vickershärte) in einem Streubereich von etwa ± 20 HV.

Der oben angeführte Stahl mit der Materialbezeichnung 1.4197 hat gute Ergebnisse geliefert. Gute Ergebnisse wurden auch bei der Herstellung des oben beschriebenen "Nagelfräsers" aus diesem Material mit der oben angeführten Wärmebehandlung erzielt. Zufriedenstellende Ergebnisse konnten auch mit einem Stahl mit der Materialbezeichnung 1.2516 erreicht werden. Selbstverständlich lassen sich auch noch andere Stähle verwenden, wobei jedoch die Ermittlung der richtigen Härtetemperatur und Anlasstemperatur ein wenig Geduld des Experimentators benötigt.

Oben ist die Herstellung und Verwendung an Hand eines "Nagel"-Fräsers beschrieben worden. Selbstverständlich können mit der obigen Methode Fräser beliebiger Kontur und Schneidenkonfiguration hergestellt werden. Es können auch andere Materialzusammensetzungen verwendet werden. Es ist lediglich darauf zu achten, dass die Härte im Bereich der Schneiden um eine Sicherheitstoleranz kleiner ist als diejenige der stählernen Elemente in einer orthodontischen Apparatur.

## Patentansprüche

1. Verfahren zur Anpassungs-Bearbeitung an einer orthodontischen Apparatur **(13)** mit einem Fräser **(1),** wobei die Apparatur **(13)** einen Kunststoff-Grundkörper **(15)** mit aus diesem hervorstehenden stählernen Elementen **(9 bis11)**, insbesondere Halteelementen für eine Fixierung und/oder Halterung am Unter- oder Oberkiefer, hat, **dadurch gekennzeichnet, dass** zur Bearbeitung ein Fräserschneiden **(5a, 5b)** aufweisender Fräser **(1)** verwendet wird, wobei die Härte des Fräsers und seiner Schneiden lediglich um eine Sicherheitstoleranz kleiner ist als die Härte der stählernen Elemente **(9 bis11)** und somit weitaus grösser ist als diejenige des Grundkörpers **(15),** damit bei einer langen Standzeit des Fräsers **(1)** eine hohe Materialabtragungsrate bei einer zu vernachlässigenden Wärmebeanspruchung des Grundkörpers **(15)** am Bearbeitungsort ohne merkliche Abrasion an den Halteelementen (9 **bis11)** bei einer unvorhergesehenen Touchierung gegeben ist.

2. Bearbeitungsverfahren nach Anspruch 1, **dadurch gekennzeichnet, dass** die vorgegebene Härte jedes Fräsers bzw. dessen Schneiden vorzugsweise um fünf Rockwellhärtegrade kleiner als die Härte der stählernen Elemente **(9 bis11)**, vorzugsweise kleiner als eine Rockwellhärte von 43,5 ist.

3. Bearbeitungsverfahren nach Anspruch 2, **dadurch gekennzeichnet, dass** die vorgegebene Härte durch eine Hartschicht mit einer Tiefe von weniger als 0,5 mm, vorzugsweise von unter 30 µm erzeugt wird.

4. Bearbeitungsverfahren nach einem der Ansprüche 1 bis 3, **dadurch gekennzeichnet, dass** bei jedem Fräser bzw. seinen Schneiden eine Härtung auf eine Brinellhärte von HB 340 ± HB 20 (Rockwellhärte 34 ± 5), insbesondere eine Härtung zwischen HB 323 und HB 345 (Rockwellhärte etwa zwischen 33 und 35), vorgenommen wird.

5. Bearbeitungsverfahren nach einem der Ansprüche 1 bis 4, **dadurch gekennzeichnet, dass** der Fräser **(1)** ausgehend von einem zylinderförmigen Stahlstab hergestellt wird, wobei als Stabmaterial insbesondere ein Stahl mit der Werkstoffkennzeichnung 1.4301; 1.4305; 1.4404 + S+Cu oder 1.4435 oder artverwandtem Material verwendet wird, der zylinderförmige Stahlstab zur Härtung unter einer Durchmesserreduzierung kaltgezogen wird, wobei das Stabmaterial derart kaltgezogen wird, bis sein Durchmesser sich auf etwa 85% erringert hat, der kaltgezogene Stahlstab auf vorgegebene Fräserlängen abgelenkt wird, und jeweils ein abgelenktes Stabende als Pyramide, insbesondere als quadratische Pyramide, zugeschliffen wird, wobei die Pyramidenkanten Schneiden des Fräsers bilden.

6. Bearbeitungsverfahren nach einem der Ansprüche 1 bis 4, **dadurch gekennzeichnet, dass** jeder Fräser mit einem Schneiden aufweisenden Fräserkopf und einem Einspannschaft aus Stahl, insbesondere aus einem Stahl mit der Werkstoffkennzeichnung 1.4197 oder artverwandtem Material, insbesondere aus einem Werkzeugstahl mit der Werkzeugkennzeichnung 1.2516, geformt wird, anschliessend unter Schutzgas, vorzugsweise auf etwa 1030°C erwärmt und dann abgeschreckt wird und in einem anschliessenden Arbeitsschritt bei 700°C angelassen wird.

7. Verfahren zur Herstellung von Fräserschneiden **(5a, 5b)** aufweisenden Fräsern **(1)** für die Anpassungs-Bearbeitung an einer orthodontischen Apparatur **(13),** mit einem Kunststoff-Grundkörper **(15),** wobei aus diesem stählerne Elemente **(9 bis11)**, insbesondere Halteelemente für eine Fixierung und/oder Halterung am Unter- oder Oberkiefer, hervorstehen, **dadurch gekennzeichnet, dass** als Fräsermaterial ein Stahl, insbesondere mit einer Werkstoffkennzeichnung 1.2516, 1.4301; 1.4305; 1.4404 + S+Cu oder 1.4435 oder 1.4197 oder artverwandtem Material, verwendet wird, und das Fräsermaterial derart gehärtet wird, dass lediglich eine Brinellhärte von HB 350 ± HB 20, insbesondere zwischen HB 323 und HB 345 erhalten wird, damit eine gute Kunststoffabtragungsrate ohne merkliche Erwärmung des Kunststoffes bei einer langen Standzeit des Fräsers gegeben ist und bei einer unvorhergesehenen Touchierung der Fräserschneiden **(5a, 5b)** mit einem der stählernen Elemente **(9 bis 11)** keine merkliche Abrasion an den stählernen Elementen erfolgt.

8. Herstellungsverfahren nach Anspruch 7, insbesondere zur Herstellung eines sogenannten Nagelfräsers, **dadurch gekennzeichnet, dass** zur Härtung des Fräsermaterials dieses kaltgezogen wird, wobei vorzugsweise ausgehend von einem stabförmigen Material eine Durchmesserreduktion auf 85%, vorzugsweise zwischen 87,2% und 83,5%, vorgenommen wird, wobei vorzugsweise als Fräsermaterial ein Stahl mit der Werkstoffkennzeichnung 1.4301; 1.4305; 1.4404 + S+Cu oder 1.4435 oder artverwandtem Material verwendet wird.

9. Verfahren nach Anspruch 7, insbesondere zur Herstellung eines sogenannten Formfräsers, **dadurch** gekenzeichnet, dass zur Härtung des Fräsermaterials dieses unter Schutzgas auf über 1000°C, insbesondere auf 1030°C ± 10°C erwärmt, anschliessend abgeschreckt wird und in einem nachfolgenden Arbeitsschritt auf 700°C ± 10°C angelassen wird.

10. Fräserschneiden **(5a, 5b)** aufweisender Fräser **(1),** hergestellt nach einem Verfahren gemäss den Ansprüchen 7 bis 9 zu einer Anpassungs-Bearbeitung an einer orthodontischen Apparatur **(13)** mit einem Kunststoff-Grundkörper **(15),** aus dem stählerne Elemente **(9 bis11)**, insbesondere Halteelemente für eine Fixierung und /oder Halterung am Unter- oder Oberkiefer, hervorstehen, **dadurch gekennzeichnet, dass** das Fräsermaterial ein Stahl, vorzugsweise ein Stahl mit der Werkstoffkennzeichnung 1.2516, 1.4301; 1.4305; 1.4404 + S+Cu oder 1.4435 oder 1.4197 oder ein artverwandtes Material ist, und das Fräsermaterial derart gehärtet ist, dass es lediglich eine Brinellhärte von HB 350 ± HB 20 (Rockwellhärte 34 ± 5), insbesondere zwischen HB 323 und HB 345 (Rockwellhärte etwa zwischen 33 und 35) hat, damit eine gute Kunststoffabtragungsrate ohne merkliche Erwärmung des Kunststoffes bei einer langen Standzeit des Fräsers gegeben ist und bei einer unvorhergesehenen Touchierung der Fräserschneiden **(5a, 5b)** mit einem der stählernen Elemente **(9 bis 11)** keine merkliche Abrasion an den stählernen Elementen erfolgt.

11. Fräser **(1)** nach Anspruch 10, **dadurch gekennzeichnet, dass** er als sogenannter Nagelfräser ausgebildet ist, das Fräsermaterial ein kaltgezogener Stahl, insbesondere ein Stahl mit der Werkstoffkennzeichnung 1.4301; 1.4305; 1.4404 + S+Cu oder 1.4435 oder ein artverwandtes Material ist, der Fräser einen zylindrischen Einspannschaft hat, von dem ausgehend als Fräskopf eine gerade Pyramide, insbesondere eine quadratische Pyramide, ausgeformt ist.

12. Fräser **(1)** nach Anspruch 10, **dadurch gekennzeichnet, dass** er als sogenannter Formfräser ausgebildet ist, das Fräsermaterial ein wärmebehandelter Stahl, insbesondere ein Stahl mit der Werkstoffkennzeichnung 1.2516, 1.4197 oder ein artverwandtes Material ist.
